# EUROPÄISCHE PATENTSCHRIFT

(11) **EP 1 298 024 B1**
(45) Veröffentlichungstag und Bekanntmachung des Hinweises auf die Patenterteilung: **29.08.2007**
(21) Anmeldenummer: 02021055.5
(22) Anmeldetag: 20.09.2002
(51) Int. Cl.: B62B 5/00

(54) **Mitdrehende elektrische Platine**
Rotating electrical board
Platine électrique tournante

(30) Priorität: 01.10.2001 DE 10148458
(43) Veröffentlichungstag der Anmeldung: 02.04.2003
(73) Patentinhaber: STILL S.A.R.L., 77100 Meaux (FR)
(72) Erfinder: Fabre, Christian, 60360 Auchy la Montagne (FR); Alegre, Jean-Pierre, 60150 Thourotte (FR)
(74) Vertreter: Geirhos, Johann

(56) Entgegenhaltungen:
- EP-A- 0 999 081
- DE-A1- 4 434 327
- DE-C1- 3 641 022

## Beschreibung

Die Erfindung betrifft eine Antriebseinheit für ein Flurförderzeug mit einer Leistungselektronikeinheit und einem elektrischen Antriebsmotor, der über ein fest übersetztes Getriebe mit einem Antriebsrad verbunden ist, wobei zum Lenken des Antriebsrads der Antriebsmotor und das Getriebe gemeinsam mit dem Antriebsrad um eine zumindest annähernd vertikale Achse gedreht werden.

Flurförderzeuge dieser Art besitzen einen Lastteil, der relativ zu einem Antriebsteil anhebbar ist, mit einer Lastaufnahmevorrichtung. In dem Antriebsteil befinden sich die Antriebseinheit, ein Antriebsrad und Anzeige- und Bedienelemente des Flurförderzeugs.

Die Antriebseinheit besitzt einen elektrischen Antriebsmotor und eine Leistungselektronikeinheit. Von der Leistungselektronikeinheit führen Kabel zu dem Antriebsmotor, wodurch die Versorgung des Antriebsmotors mit elektrischer Energie und damit dessen Einsatzbereitschaft sichergestellt wird.

Während des Betriebs des Flurförderzeugs wird bei einer Bewegung des Antriebsrades auch der in der Regel mit dem Antriebsrad verbundene Antriebsmotor mitgedreht. Dagegen verbleibt bei bisher bekannten Flurförderzeugen des Standes der Technik (EP 0999081, das die Merkmale des Oberbegriffs des Anspruchs 1 enthält) die Leistungselektronikeinheit in ihrer ursprünglichen Position und wird nicht mitbewegt. Daher kommt es aufgrund der Drehung des Antriebsmotors relativ zu der Leistungselektronikeinheit automatisch zu einer Verdrillung der die beiden Teile verbindenden Kabel, die der Leistungsversorgung und der Steuerung des Antriebsmotors dienen.

Ein Nachteil der oben beschriebenen Ausführung liegt darin begründet, dass die Kabel mit fortgeschrittener Betriebsdauer zahlreiche Verdrehungen und Verdrillungen in unterschiedliche Richtungen erfahren, und in der Folge häufig Brüche erleiden und somit ausgewechselt werden müssen.

Der vorliegenden Erfindung liegt daher die Aufgabe zugrunde, eine Antriebseinheit zur Verfügung zu stellen, die ein Beschädigen der Kabel verhindert.

Diese Aufgabe wird erfindungsgemäß dadurch gelöst, dass die Leistungselektronikeinheit derart mit dem Antriebsmotor verbunden ist, dass sie bei einem Drehen des Antriebsmotors mit dem Antriebsmotor mitgedreht wird. Da sich die beiden Bauteile bei dieser Anordnung nicht relativ zueinander verdrehen können, werden auch die den Antriebsmotor und die Leistungselektronikeinheit verbindenden Kabel nicht verdrillt, sondern bleiben bei allen Lenkbewegungen des Antriebsrades in ihrer ursprünglichen Position. Die Kabel erfahren daher über die Lebensdauer des Flurförderzeugs gesehen eine deutlich geringere Belastung, so dass Kabelbrüche weitgehend vermieden werden können.

Die Leistungselektronikeinheit ist zur elektrischen Versorgung des Antriebsmotors vorgesehen.

Es ist weiterhin vorteilhaft, wenn zur Versorgung des Antriebsmotors Kabel vorgesehen sind, die direkt von der Leistungselektronikeinheit zu dem Antriebsmotor geführt sind. Bei dieser Ausgestaltung wird eine umständliche Kabelführung vermieden, die eine eventuelle Schlingenbildung der Kabel nach sich zöge und eine Beschädigung der Kabel durch Verhakungen und Quetschungen begünstigen würde.

Um eine direkte Kabelführung zwischen dem Antriebsmotor und der Leistungselektronikeinheit zu ermöglichen, ist die Leistungselektronikeinheit senkrecht oberhalb des Antriebsmotors angeordnet.

Zweckmäßigerweise ist die Leistungselektronikeinheit an einem Gehäuse des Antriebsmotors befestigt. Somit sind die Leistungselektronikeinheit und der Antriebsmotor relativ zueinander unverschieblich und unverdrehbar verbunden und bewegen sich bei einer Drehbewegung der Antriebseinheit gemeinsam. Die Befestigung kann direkt oder indirekt, z.B. über eine Halterung erfolgen.

Gemäß einer zweckmäßigen Weiterbildung der Erfindung sind an der Leistungselektronikeinheit Anzeigeelemente oder Bedienelemente angebracht. Als Anzeigeelement und Bedienelement können beispielsweise ein Betriebsstundenzähler bzw. ein Schlüsselschalter angebracht sein. Die für die Bedienperson wichtigen Funktionen können so auf bequeme Art und Weise in jeder Stellung der Antriebseinheit betätigt werden.

Weiterhin ist es von Vorteil, wenn im Bereich der Anzeigeelemente ein nicht drehbares, durchsichtiges Gehäusebauteil angeordnet ist. Dies ermöglicht der Bedienperson ein einwandfreies Ablesen der aktuellen Flurförderzeugdaten und schützt die Anzeigeelemente vor Beschädigungen.

Weitere Vorteile und Einzelheiten der Erfindung werden anhand des in der schematischen Figur dargestellten Ausführungsbeispiels näher erläutert.

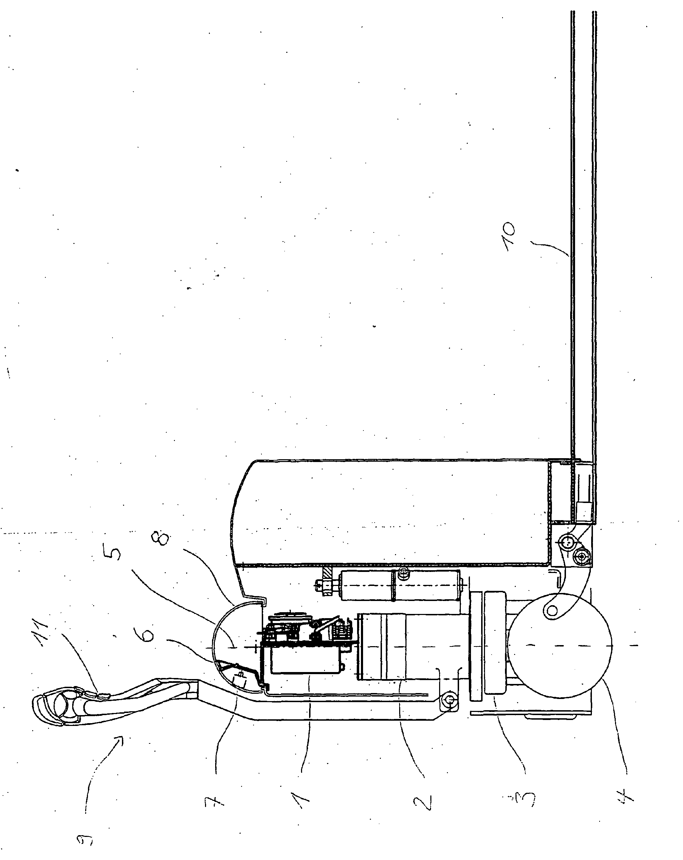

Die Figur zeigt als erfindungsgemäßes Flurförderzeug ein deichselgelenktes Flurförderzeug. Ein nicht anhebbarer Antriebsteil 9 steht mit einem Antriebsrad 4 auf einer Fahrbahn auf. An dem Antriebsteil 9 ist ein Lastteil 10, der mit nicht dargestellten Lastrollen an der Fahrbahn abgestützt ist, höhenbeweglich befestigt. Die Bedienung des Flurförderzeugs erfolgt mit einer Lenkdeichsel 11.

Innerhalb des Antriebsteils 9 sind ein elektrischer Antriebsmotor 2 und eine Leistungselektronikeinheit 1 angeordnet. Diese sind mittels nicht dargestellten Kabeln miteinander verbunden, um die elektrische Versorgung des Antriebsmotors 2 zu gewährleisten. Die sich senkrecht oberhalb des Antriebsmotors 2 befindliche Leistungselektronikeinheit 1 ist direkt oder indirekt an einem Gehäusebauteil des Antriebsmotors 2 befestigt, so dass sich die beiden Bauteile nicht relativ zueinander bewegen können. Der Antriebsmotor 2 ist an seinem unteren Ende an ein fest übersetztes Getriebe 3 angeschlossen, welches wiederum mit einem Antriebsrad 4 verbunden ist.

Bewegt die Bedienperson die Lenkdeichsel 11 um eine annähernd vertikale Achse 5, so dreht sich das Antriebsrad 4 ebenfalls um die Achse 5. Aufgrund ihrer Verbindungen untereinander werden dabei außer dem direkt mit dem Antriebsrad 4 verbundenen Getriebe 3 auch der Antriebsmotor 2 und die Leistungselektronikeinheit 1 mitbewegt und beschreiben ebenfalls eine Kreisbewegung um die Achse 5. Die nicht dargestellten Verbindungskabel zwischen der Leistungselektronikeinheit 1 und dem Antriebsmotor 2 werden bei dieser Bewegung mitgedreht und unterliegen daher keiner Verdrillung.

An einem Rahmenteil der Leistungselektronikeinheit 1 sind in dem vorliegenden Ausführungsbeispiel Anzeigeelemente 6 und ein Bedienelement 7 des Flurförderzeugs angebracht. Bei dem Anzeigeelement 6 kann es sich beispielsweise um einen Betriebsstundenzähler handeln. Das Bedienelement 7 ist hier als Schlüsselschalter ausgeführt. Die Anzeige- und Bedienelemente 6 und 7 werden von einem durchsichtigen, nicht drehbaren, halbkugelförmigen Gehäusebauteil 8 überdeckt, das ebenfalls an einem Rahmenbauteil des Antriebsteils 9 befestigt ist. Somit werden die Anzeige- und Bedienelemente 6 und 7 vor Beschädigungen geschützt. Die Bedienperson ist außerdem in der Lage, auch im Falle einer um die Achse 5 verdrehten Deichsel 11 das ordnungsgemäße Funktionieren wichtiger Funktionen des Flurförderzeug mit einem Blick auf die Anzeigeelemente 6 zu kontrollieren und Bedienelemente 7 komfortabel zu betätigen, da sich die Elemente mit der Leistungselektronikeinheit 1 gemeinsam bewegen. Darüber hinaus kann zusätzlich ein Kombihalter für Werkzeuge an der Leistungselektronikeinheit 1 befestigt werden, so dass die Bedienperson immer alle benötigten Werkzeuge griffbereit hat.

Mit einer einfachen Konstruktion wird also eine kostensparende und die Beschädigungen an Kabeln deutlich verringernde Antriebseinheit zur Verfügung gestellt. Darüber hinaus bietet die Antriebseinheit noch weitere Vorteile für die komfortable Handhabung des Flurförderzeugs durch die Bedienperson.

## Patentansprüche

1. Antriebseinheit für ein Flurförderzeug mit einer Leistungselektronikeinheit (1) und einem elektrischen Antriebsmotor (2), der über ein fest übersetztes Getriebe (3) mit einem Antriebsrad (4) verbunden ist, wobei zum Lenken des Antriebsrads (4) der Antriebsmotor (2) und das Getriebe (3) gemeinsam mit dem Antriebsrad (4) um eine zumindest annähernd vertikale Achse (5) gedreht werden, **dadurch gekennzeichnet, dass** die Leistungselektronikeinheit (1) derart mit dem Antriebsmotor (2) verbunden ist, dass sie bei einem Drehen des Antriebsmotors (2) mit dem Antriebsmotor (2) mitgedreht wird.

2. Antriebseinheit nach Anspruch 1, **dadurch gekennzeichnet, dass** die Leistungselektronikeinheit (1) zur elektrischen Versorgung des Antriebsmotors (2) vorgesehen ist.

3. Antriebseinheit nach Anspruch 1 oder 2, **dadurch gekennzeichnet, dass** zur Versorgung des Antriebsmotors (2) Kabel vorgesehen sind, die direkt von der Leistungselektronikeinheit (1) zu dem Antriebsmotor (2) geführt sind.

4. Antriebseinheit nach einem der Ansprüche 1 bis 3, **dadurch gekennzeichnet, dass** die Leistungselektronikeinheit (1) senkrecht oberhalb des Antriebsmotors (2) angeordnet ist.

5. Antriebseinheit nach einem der Ansprüche 1 bis 4, **dadurch gekennzeichnet, dass** die Leistungselektronikeinheit (1) an einem Gehäuse des Antriebsmotors (2) befestigt ist.

6. Antriebseinheit nach einem der Ansprüche 1 bis 5, **dadurch gekennzeichnet, dass** an der Leistungselektronikeinheit (1) Anzeigeelemente (6) oder Bedienelemente (7) angebracht sind.

7. Antriebseinheit nach einem der Ansprüche 1 bis 6, **dadurch gekennzeichnet, dass** im Bereich der Anzeigeelemente (6) ein nicht drehbares, durchsichtiges Gehäusebauteil (8) angeordnet ist.

## Claims

1. Drive unit for an industrial truck having a power electronics unit (1) and an electrical drive motor (2), which is connected to a driving wheel (4) via a fixedly shifted transmission (3), the drive motor (2) and the transmission (3) being rotated together with the driving wheel (4) about an at least approximately vertical axis (5) for the purpose of steering the driving wheel (4), **characterized in that** the power electronics unit (1) is connected to the drive motor (2) in such a way that it co-rotates with the drive motor (2) in the event of a rotation of the drive motor (2).

2. Drive unit according to Claim 1, **characterized in that** the power electronics unit (1) is provided for the electrical supply to the drive motor (2).

3. Drive unit according to Claim 1 or 2, **characterized in that**, in order to supply the drive motor (2), cables are provided which are routed directly from the power electronics unit (1) to the drive motor (2).

4. Drive unit according to one of Claims 1 to 3, **characterized in that** the power electronics unit (1) is arranged perpendicularly above the drive motor (2).

5. Drive unit according to one of Claims 1 to 4, **characterized in that** the power electronics unit (1) is fixed to a housing of the drive motor (2).

6. Drive unit according to one of Claims 1 to 5, **characterized in that** display elements (6) or operating elements (7) are fitted to the power electronics unit (1).

7. Drive unit according to one of Claims 1 to 6, **characterized in that** a transparent housing component (8) which is not capable of rotating is arranged in the region of the display elements (6).

## Revendications

1. Unité d'entraînement pour un chariot de manutention comprenant une unité électronique de puissance (1) et un moteur d'entraînement électrique (2) qui est relié avec une roue motrice (4) par le biais d'un engrenage (3) à rapport de démultiplication fixe, le moteur d'entraînement (2) et l'engrenage (3), conjointement avec la roue motrice (4), pouvant pivoter autour d'un axe (5) au moins approximativement vertical en vue d'orienter la roue motrice (4), **caractérisée en ce que** l'unité électronique de puissance (1) est reliée avec le moteur d'entraînement (2) de telle sorte qu'elle pivote en même temps que le moteur d'entraînement (2) lors d'un pivotement du moteur d'entraînement (2).

2. Unité d'entraînement selon la revendication 1, **caractérisée en ce que** l'unité électronique de puissance (1) est prévue pour l'alimentation électrique du moteur d'entraînement (2).

3. Unité d'entraînement selon la revendication 1 ou 2, **caractérisée en ce que** des câbles qui sont acheminés directement de l'unité électronique de puissance (1) vers le moteur d'entraînement (2) sont prévus pour l'alimentation du moteur d'entraînement (2).

4. Unité d'entraînement selon l'une des revendications 1 à 3, **caractérisée en ce que** l'unité électronique de puissance (1) est disposée verticalement au-dessus du moteur d'entraînement (2).

5. Unité d'entraînement selon l'une des revendications 1 à 4, **caractérisée en ce que** l'unité électronique de puissance (1) est fixée à un boîtier du moteur d'entraînement (2).

6. Unité d'entraînement selon l'une des revendications 1 à 5, **caractérisée en ce que** des éléments indicateurs (6) ou des éléments de commande (7) sont montés sur l'unité électronique de puissance (1) .

7. Unité d'entraînement selon l'une des revendications 1 à 6, **caractérisée en ce qu'**un composant de boîtier (8) transparent et non pivotant est disposé dans la zone des éléments indicateurs (6).
